(19) Europäisches Patentamt
European Patent Office
Office européen des brevets

(11) Publication number: 0 389 797 A1

(12) **EUROPEAN PATENT APPLICATION**

(21) Application number: 90103524.6

(22) Date of filing: 23.02.90

(51) Int. Cl.5: C08L 67/02, C08L 23/26, C08L 63/00, C08L 63/06

(30) Priority: 27.03.89 US 329133

(43) Date of publication of application: 03.10.90 Bulletin 90/40

(84) Designated Contracting States: DE FR GB IT NL

(71) Applicant: GENERAL ELECTRIC COMPANY
1 River Road
Schenectady New York 10022(US)

(72) Inventor: Liu, Nan-I
1604 Country Club Road No D
Mount Vernon, Indiana 47620(US)

(74) Representative: Catherine, Alain
General Electric France Service de Propriété Industrielle 18 Rue Horace Vernet
F-92136 Issy-Les-Moulineaux Cedex(FR)

(54) **Blends of polyesters and polyolefins.**

(57) Disclosed are polymeric compositions comprising at least one polyester resin; at least one polyolefin which has been modified by an epoxy reactive moiety; and at least one multifunctional epoxy resin.

EP 0 389 797 A1

# BLENDS OF POLYESTERS AND POLYOLEFINS

This invention relates to thermoplastic molding compositions, particularly thermoplastic polyesters, that can be blended with a polyolefin by incorporating therein a modified polyolefin and a multifunctional epoxy compound. More particularly, the invention pertains to compositions of (a) from about 1 % to about 99 % by weight of at least one polyester preferably selected from the group consisting essentially of poly(ethylene terephthalate) and a poly(1,4-butylene terephthalate), each polyester comprising 0-100% of the polyester component; (b) from about 99 % to about 1 % by weight of a modified polyolefin; and (c) about 0.01 % to about 2 % by weight of a multifunctional epoxy compound.

## BACKGROUND OF THE INVENTION

High molecular weight polyesters and particularly polyesters and copolyesters of glycols and terephthalic or isophthalic acid have been available for a number of years. These are described inter alia in Whinfield et al, U.S. Pat. No. 2,465,319 and in Pengilly, U.S. Pat. No. 3,047,539. These patents disclose that the polyesters are particularly advantageous as film and fiber-formers.

With the development of molecular weight control, the use of nucleating agents and two-step molding cycles, poly(ethylene terephthalate) has become an important constituent of injection moldable compositions. Further, poly(1,4-butylene terephthalate), because of its very rapid crystallization from the melt, is uniquely useful as a component in such compositions. Work pieces molded from such polyester resins, in comparison with other thermoplastics, offer a high degree of surface hardness and abrasion resistance, high gloss, and lower surface friction.

Furthermore, in particular, poly(1,4-butylene terephthalate) is much simpler to use in injection molding techniques than poly(ethylene terephthalate). For example, it is possible to injection mold poly (1,4-butylene terephthalate) at low mold temperatures of from about 30° C. to 60° C. to produce highly crystalline, dimensionally stable moldings in short cycle times. On account of the high rate of crystallization, even at low mold temperatures, no difficulty is encountered in removing the moldings from the molds. Additionally, the dimensional stability of poly(1,4-butylene terephthalate) injection moldings is very good even at temperatures near or well above the glass temperature of poly(1,4-butylene terrephthalate).

It is also known to add polyolef ins to thermoplastic polyesters to enhance or provide certain properties. For example, Rein et al, U.S. Pat. No. 3,405,198, disclose the use of polyethylene in poly(ethylene terephthalate) as an impact modifier. Holub et al, U.S. Pat. No. 4,122,061, disclose polyester compositions which comprise a poly(1,4-butylene terephthalate) resin, a poly(ethylene terephthalate) resin, a fibrous glass reinforcement, alone or in combination with a mineral filler and, as an impact modifier therefor, a polyolefin or olefin based copolymer resin including polyethylene and propylene-ethylene copolymer. Cohen et al, U.S. Pat. No. 4,185,047, disclose the use of high pressure low density polyethylene in thermoplastic polyester compositions, particularly (poly(ethylene terephthalate) and poly(1,4-butylene terephthalate) for improved mold releasability. All of the aforementioned patents are incorporated herein by reference.

It has been known, however, that such blends of polyolefins and polyesters are not extremely compatible and can pose processing difficulties to the individual practitioner of the present invention.

It has now been unexpectedly discovered that polyolefins and polyesters can be compatibly mixed with an accompanying improvement in physical properties by mixing a thermoplastic polyester with (1) an epoxy reactive moiety and (2) a multifunctional epoxy compound.

## DETAILED DESCRIPTION OF THE INVENTION

The preferred polyesters utilized in the present invention are higher molecular weight polyesters, most preferably linear polymeric glycol esters of terephthalic acid and isophthalic acids. They can be prepared by known techniques such as by the alcoholysis of esters of the phthalic acid with a glycol and subsequent polymerization, by heating glycols with the free acids or with halide derivatives thereof, and similar processes. These are described in U.S. Pat. Nos. 2,465,319 and 3,047,539, and elsewhere. In addition to the phthalates, amounts, e.g., from about 0.5 to 15% by weight, of other aromatic dicarboxylic acids, such as naphthalene dicarboxylic acid, can be present in the polyester component. Although the term "linear" is

used, the reactants can also include amounts of tri- or polyfunctional branching agents, such as trimethylolpropane, pentaerythritol, and trimethyl trimesate.

Preferred polyesters will be of the family consisting of high molecular weight, polymeric glycol terephthalates or isophthalates having repeating units of the general formula:

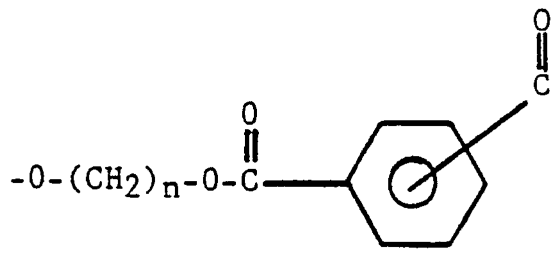

wherein n is a whole number of from 2 to 10, preferably from 2 to 4, and mixtures of such esters, including copolyesters of terephthalic and isophthalic acids of up to about 30 mole % isophthalic units.

Especially preferred polyesters are poly(ethylene terephthalate) and a poly(butylene terephthalate), most preferably poly(1,4-butylene terephthalate).

Examples of polyolefins which may be utilized in the present invention include homopolymers as well as copolymers of polyethylene (high and low density), polypropylene, polyisobutylene, and random copolymers of ethylene with propylene, or with polypropylene and a nonconjugated diene. Chlorinated olefin products are also included in the category above, as are cross-linked olefins which can be carboxylated in the manner described herein. The foregoing categories include copolymers of ethylene and other polyolefins with nonolefinic groups provided they meet the requirements outlined herein.

The linear low density polyethylene useful for the present invention are well known materials, they are available commercially, e.g. from Exxon under the tradename Escorene, from Dow Chemicals under the tradename DOWLEX or from Union Carbide under the tradename G. Resins. Alternatively, they may readily be prepared by state of the art polymerization processess such as those described in U.S. Pat. No. 4,254,009, U.S. Pat. No. 4,076,698, European Patent Application 4645 (published Oct. 17, 1979), and U.S. Pat. No. 4,128,607, all incorporated herein by reference. These polymers have a density between about 0.89 and about 0.96 gram/cc, preferably between about 0.915 and 0.945 grams/cc. These linear low density polyethylene polymers are actually copolymers of ethylene and a minor amount, less than 20 mole percent, preferably less than 15 mole %, of an alpha olefin of 3 to 15 carbon atoms, preferably 3 to 10 carbon atoms, most preferably 4 to 8 carbon atoms. These linear low density polyethylenes are distinguishable from polymers such as high pressure low density polyethylene and high density polyethylene made from coordination catalyst systems in that they are substantially free of side chain branching, having a controlled concentration of simple side chain branching as opposed to random branching.

The preferred linear low density polyethylene copolymers are prepared from ethylene and one or more alpha olefins selected from the group consisting of propylene, butene-1, pentene-1, 4 methyl pentene-1, hexene-1 and octene-1, most preferably butene-1 and octene-1. Polymers of desired density may be obtained by controlling the copolymerization ratio of alpha olefin and the formation proportion of the polymer during copolymerization. The addition of increasing amounts of the comonomers to the copolymers results in lowering the density of the polymer.

Polymers based on higher olefins are not as readily available and, therefore, not as preferred. Examples of such higher polyolefins are polymers based on 2-methyl-1-butene, 1-pentene, 4-methyl-1-pentene, and the like. They can be prepared, by known procedures including those described in Encyclopedia of Polymer Science and Technology, John Wiley & Sons, Inc., Vol. 9, pp. 440-460, 1965, incorporated herein by reference.

Olefin-containing copolymers such as olefin acrylates and olefin diene terpolymers can also be used as the olefin component impact modifiers in the present compositions. An example of an olefin acrylate copolymer impact modifier is ethylene ethylacrylate copolymer available from Union Carbide as DPD-6169. Other higher olefin monomers can be employed as copolymerrs with alkyl acrylates, for example, propylene and n-butyl acrylate. The olefin diene terpolymers are well known in the art and generally fall into the EPDM (ethylene propylene diene) family of terpolymers. They are commercially available such as, for example, EPSYN 704 from Copolymer Rubber Company. They are more fully described in U.S. Patent 4,559,388, incorporated herein by reference.

Various rubber polymers can also be employed as the olefin component. Examples of such rubbery polymers are polybutadiene, polyisoprene, styrene-butadiene, and various other polymers or copolymers

having a rubbery dienic monomer.

Styrene-containing polymers can also be employed as the olefin component. Examples of such polymers are acrylonitrile-butadiene-styrene, styrene-acrylonitrile, acrylonitrile-butadiene-alpha-methylstyrene, methacrylate-butadiene-styrene, and other high impact styrene-containing polymers such as, for example, high impact polystyrene.

As indicated above, the polyolefins utilized in the invention are first modified, by conventional techniques well known in the art, with epoxy reactive functional groups. Generally, this is accomplished by replacing a hydrogen on the polyolefins with the epoxy reactive functional group which are well known to those skilled in the art. Exemplary of suitable functionable groups are anyhydrides, carboxylic acids, acrylates, amines, etc.

The polyepoxide compounds utilized in the compositions of the present invention include epoxy compounds having a functionality (multiple epoxide functional groups) of more than 2.

Preferred epoxy compounds include epoxies derived from an orthocresolformaldehyde novolac which is then reacted with epichlorohydrin to form a polyepoxide. Such resins are manufactured by Ciba-Geiby under the name "ECN" (epoxy cresol novolac) resins. One such preferred epoxy compound is ECN 1299, which has the following properties:
Molecular weight-approx.- 1270; Weight per Epoxide-235;
Epoxy Value (Eg./100 gm)-0.425; Melting point (°C)-99;
Functionality (Epoxide type)-4.

Additional preferred epoxy compounds are the D.E.N. 400 series epoxy novolac resins manufactured by Dow Chemical. A particularly preferred novolac epoxy resin in this series is D.E.N. 485 resin, which is a solid epoxy novolac having a functionality of 5.5, and the following structural formula:

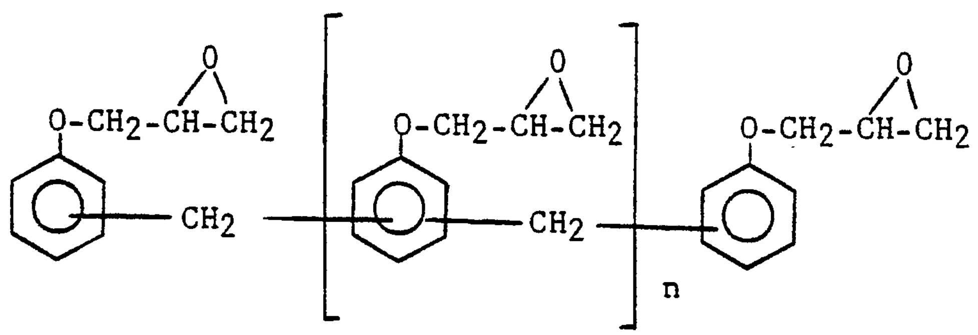

where the average value of n is 3.5. Another preferred multifunctional epoxy novolac resins is the XD series of resins manufactured by the Dow Chemical Company. One particularly preferred multifunctional epoxy in this series is XD 9053.01 resin, which has the formula:

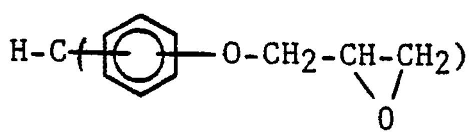

Other multi-epoxy compounds suitable for use herein include poly(0- or N-epoxyalkyl-substituted) cyclic amide, imide or imidate, which usually containing one and only one non-epoxy cyclic moiety although compounds with linked or fused moieties are also contemplated. Preferably, these are compounds in which the epoxyalkyl group is bonded directly to the oxygen or nitrogen atom; however, compounds containing intervening structures, such as 2-carbo-glycidyloxyethyl compounds, may also be used.

Illustrative cyclic nuclei which may be present in such multifunctional epoxy compounds are the triazine, barbiturate, hydantoin, uracil, pyromellitic diimide, piperazinedione and parabanate ring systems. As previously noted, the epoxy-containing functionalities may be present as substituents on oxygen or nitrogen atoms therein, with nitrogen atoms frequently being preferred. The most suitable multi-functional epoxy compounds of this type are triazine derivatives including triglycidyl cyanurate and triglycidyl isocyanurate (hereinafter "TGIC"). TGIC is particularly preferred by reason of its availability and particular suitability for the formation of branched polyesters. It has the formula

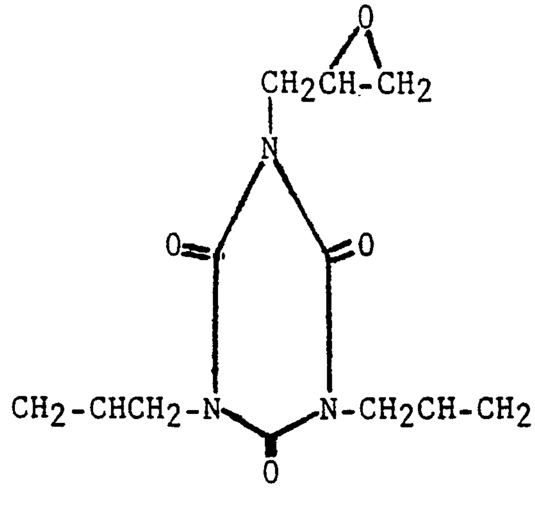

It should be noted that many polyepoxides of this type are irritants and/or health hazards. For example, triglycidyl isocyanurate has mutagenic properties. Contact with the body and inhalation should therefore be avoided as much as possible.

According to the present invention, the polyester resin component of the composition of the present invention will comprise at least about 1 weight percent, generally about 10 to about 90 weight percent and preferably about 15 to about 85 weight percent of the total composition of polyester resin, polyolefin resin and epoxy compound. The polyolefin resin component of the present composition will comprise at least about 1 weight percent, most often about 10 to about 90 weight percent and preferably about 15 to about 85 weight percent of the total composition. As indicated herein, the polyolef in component of the composition can be comprised of more than one polyolefin resin and the polyester component of the composition can be comprised of more than one polyester resin.

The amount of the multifunctional epoxy compound which is present in the instant composition will generally be dependent upon the particular epoxy compound used as well as upon the particular polyester and polyolefin compounds present in the composition. Generally, however, this amount is at least about 0.01 weight percent, based on the total amount of epoxy compound, polyolefin compound and polyester resin present in the composition, preferably at least about 0.1 weight percent, and most preferably at least 0.3 weight percent. An amount of about 2 weight percent of epoxy compound should not be exceeded, and preferably an amount of 1 percent of epoxy compound should not be exceeded.

The components of the composition of the present invention can be intimately blended in a number of procedures. In one way, the polyolefin and epoxy compound are put into an extrusion compounder with the dry polyester resin and the blend is heated at an elevated temperature, e.g., 300°-450° F., and extruded to produce molding pellets. In another procedure, the epoxy compound and polyolefin are mixed with the polyester resin by blending at ordinary temperatures, then the blend is fluxed on a mill, heated, e.g., at 450°-550° F., then cooled and comminuted; or the blend can be extruded at 450°-550° F., cooled and chopped. The epoxy and polyolefin are mixed with the powdered or granular polyester and the mixture can be heated and directly formed into blow molded items using machines which compound and mold.

It should be understood that the composition obtained according to this invention may contain one or more conventional additives such as, for example, antioxidants, carbon black, reinforcing agents, plasticizers, lubricity promoters, color stabilizers, ultraviolet absorbers, X-ray opacifiers, dyes, pigments, fillers, mold release agents and the like. Satisfactory thermal, oxidative and/or ultraviolet stabilizers comprise phenols and their derivatives, amines and their derivatives, compounds containing both hydroxyl and amine groups, hydroxyazines, oximes, polymeric phenolic esters and salts of multivalent metals in which the metal is in its lower state.

Representative phenol derivatives useful as stabilizers include 3,5-di-tert-butyl-hydroxy hydro-cinnamic triester with 1,3, 5-tris-(2-hydroxyethyl-s- triazine-2,4,6-(1H, 3H, 5H) trione; 4,4'-bis-(2,6-ditertiary-butylphenol); 1,3,5-trimethyl-2,4,6-tris-(3,5-ditertiary-butyl-4-hydroxylbenzyl)benzene and 4,4'-butylidene-bis (6-tertiary-butyl-m-cresol). Various inorganic metal salts or hydroxides can be used as well as organic complexes such as nickel dibutyl dithiocarbamate, manganous salicylate and copper 3-phenylsalicylate. Typical amine stabilizers include N,N'-bis(betanaphthyl)-p-phenylenediamine; N,N'-bis(1-methylheptyl)-p-phenylenediamine and either phenyl-beta-napththyl amine or its reaction products with aldehydes. Mixtures

of hindered phenols with esters or thiodipropionic, mercapides and phosphite esters are particularly useful. Additional stabilization to ultraviolet light can be obtained by compounding with various UV absorbers such as substituted benzophenones and/or benzotriazoles.

Particularly useful stabilizers are hindered phenols which include phenols of the formula

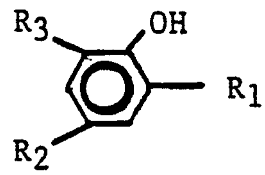

wherein $R_1$ and $R_3$ are hydrocarbon groups having from one to about 20 carbon atoms, and $R_2$ is a hydrogen atom or a hydrocarbon group having from one to about 20 carbon atoms, and bisphenol of the formula

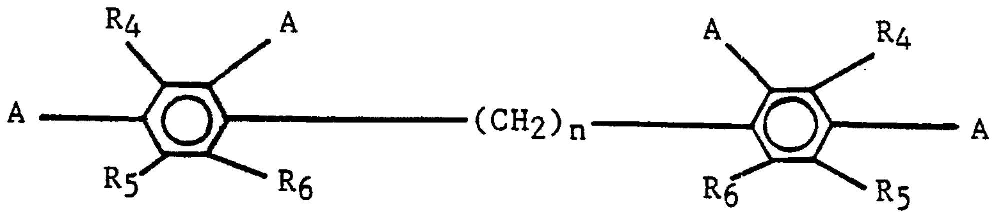

wherein $R_4$, $R_5$ and $R_6$ are each a hydrogen atom or a hydrocarbon group having from one to about 20 carbon atoms, one of the two A's on each ring is a hydroxyl group and the other A on each ring is a hydrogen atom or a hydrocarbon group having from one to about 20 carbon atoms; and n is an integer of from 0 to about 20.

Preferred hindered phenols useful in this invention include 2,6-di-tert-butyl-4-methyl-phenol, commonly known as BHT (sold under the tradename Ionol by Shell Chemical Co.); 4,4-methylene bis(2,6-di-tert-butylphenol) and 2,6-di-tert-butyl-4-n-butylphenol (sold under the tradename Ethyl 702 and Ethyl 744, respectively, by Ethyl Corp.); and tetrakis[methylene 3-(3′,5′-di-tert-butyl-4′-hydroxyphenyl) proprionate]-methane and stearyl-3-(3′,5′-di-tertbutyl-4′-hydroxyphenyl) proprionate (sold under the tradenames Irganox 1010 and Irganox 1076, respectively, by Ciba-Geigy).

The composition of the present invention may also include reinforcing fillers such as fibrous (filamentous) glass and/or mineral fillers, such as clay, mica, talc and the like. The fillers can be untreated or treated with silane or titanate coupling agents, etc. The filamentous glass to be employed as reinforcement in such embodiments of the present compositions is well known to those skilled in the art and is widely available from a number of manufacturers.

## DESCRIPTION OF THE PREFERRED EMBODIMENT

The following examples are presented to more fully and clearly illustrate the present invention. They are presented as illustrative of the invention and are not to be construed as limiting the invention thereto. In the examples all parts and percentages are on a weight basis unless otherwise specified.

The following Example 1 illustrates a composition following outside the scope of the instant invention in that it does not contain any multi-functional epoxy resin compound. This example is presented for comparative purposes only.

In all the examples, the compositions were prepared by melt blending the polyolefen, polyester and the indicated additional components using a Prodex single screw extruder at approximately 470° F.

## EXAMPLE 1

A composition was prepared which consisted of 59.8 weight percent of PBT (poly (1,4-butylene terephthalate) (Valox® 315 from General Electric Company); 40 weight percent of Polybond 64-103-14, a EPDM-acrylic acid terpolymer manufactured by British Petroleum and 0.2 weight percent of a stabilizer (Irganox 1010). The resulting polymeric composition was formed, by injection molding, into test bars measuring 2.5 inches x 1/2 inches x 1/8 inch. The notched izod of the composition was tested bearing the results of these tests set forth in the Table below.

## EXAMPLE 2

In Example 2, a polymeric composition containing 59 parts by weight of PBT of a type used in Example 1, 49 parts by weight of the polyolefen of the type used in Example 1, 0.2 parts by weight of the stabilizer used in Example 1, and 0.8 parts by weight of TGIC is injected molded into tests bars of the same dimensions as in Example 1. These tests bars are subjected to the notched izod testing procedures as were the test bars utilized in Example 1, plus additional physical tests. The results are set forth in the Table below.

The following ASTM methods were used in determining the physical characteristics of the compositions:

| | |
|---|---|
| Flexural Modulus | ASTM D790 |
| Tensile Elongation | ASTM D638 |
| Notched Izod | ASTM D256 |

Table

| Example No. | | |
|---|---|---|
| | 1 | 2 |
| NI 1/8", (ft lb/in) (room temp.) | 2.3 | 10.4 |
| Unnotched Izod 1/8", -30 ° C | NB | NB |
| Tensile Strength (psi) | - | 3500 |
| Tensile Elongation, % | - | 70 |
| Flexural Modulua | - | 143,000 |
| Sag, 290 ° F | - | 15 |
| NB = no break | | |

Obviously, other modifications and variations of the present invention are possible in light of the above teachings. It is therefore to be understood that changes may be made in the particular embodiments of the invention described which are within the full intended scope of the invention as defined by the appended claims.

## Claims

1. A polymeric composition comprising:
(i) at least one polyester resin;
(ii) at least one polyolefin which has been modified by an epoxy reactive moiety;
(iii) at least one multifunctional epoxy resin.

2. The composition of claim 1 which contains at least about 0.01 weight percent of the at least one multifunctional epoxy resin, based on the total weight of (i), (ii) and (iii).

3. The composition of claim 2 which contains at least about 0.1 weight percent of at least one

multifunctional epoxy resin, based on the total weight of (i), (ii) and (iii).

4. The composition of claim 3 which contains at least 0.3 weight percent of at least one multifunctional epoxy resin, based on the total weight of (i), (ii) and (iii).

5. The composition of claim 1 wherein said modifier composition further comprises a hindered phenol stabilizer.

6. The composition of claim 1 wherein the multifunctional epoxy resin contains more than 2 epoxide functional groups.

7. The composition of claim 6 wherein the multifunctional epoxy group is triglycidyl isocyanurate.

8. The composition of claim 1 which further contains a filler.

9. The composition of claim 1 wherein the at least one polyolefin compound is polyethylene.

10. The composition of claim 1 wherein the at least one polyolefin is an ethylene propylene diene terpolymer.

11. The composition with of Claim 1 wherin the at least one polyester resin is a high molecular weight linear thermoplastic polyester resin selected from the group consisting of polymeric glycol terephthalate and isophthalate esters having repeating units of the general formula:

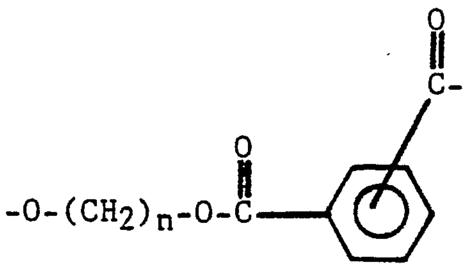

wherein n is a whole number of from 2 to 10, or a mixture of such esters.

12. The composition as defined in claim 11 wherein the at least one polyester is a poly(butylene terephthalate) ester.

13. The composition as defined in claim 12 wherein the at least one polyester is poly(1,4-butylene terephthalate).

14. The composition as defined in claim 11 wherein the at least one polyester is poly(ethylene terephthalate) ester.

15. The composition as defined in claim 1 wherein the at least one polyester is present in an amount of from about 1 to about 99 percent by weight based on the total weight of the polyester compound, the modified polyolefin compound and the multifunctional epoxy compound in the polymeric composition.

16. The composition as defined in claim 15 wherein the at least one polyester is present in an amount of from about 10 to about 90 percent by weight based on the total weight of the polyester compound, the modified polyolefin compound and the multifunctional epoxy compound in the polymeric composition.

17. The composition as defined in claim 16 wherein the at least one polyester is present in an amount of from about 15 to about 85 percent by weight based on the total weight of the polyester compound, the modified polyolefin compound and the multifunctional epoxy compound in the polymeric composition.

18. The composition as defined in claim 1 wherein the at least one polyolefin is present in an amount of from about 1 to about 99 percent by weight based on the total weight of the polyester compound, the modified polyolefin compound and the multifunctional epoxy compound in the polymeric composition.

19. The composition as defined in claim 18 wherein the at least one polyolefin is present in an amount of from about 10 to about 90 percent by weight based on the total weight of the polyester compound, the modified polyolefin compound and the multifunctional epoxy compound in the polymeric composition.

20. The composition as defined in claim 19 wherein the at least one polyolefin is present in an amount of from about 15 to about 85 percent by weight based on the total weight of the polyester compound, the modified polyolefin compound and the multifunctional epoxy compound in the polymeric composition.

European Patent Office

# EUROPEAN SEARCH REPORT

Application number

EP 90103524.6

## DOCUMENTS CONSIDERED TO BE RELEVANT

| Category | Citation of document with indication, where appropriate, of relevant passages | Relevant to claim | CLASSIFICATION OF THE APPLICATION (Int Cl 5) |
|---|---|---|---|
| X | EP - A2 - 0 285 256 (SUMITOMO CHEMICAL COMPANY LTD) * Claims; page 3, lines 11-12; page 4, lines 55-57; page 5, lines 4-14; page 6, lines 5-8 * -- | 1-4, 6-20 | C 08 L 67/02<br>C 08 L 23/26<br>C 08 L 63/00<br>C 08 L 63/06 |
| X,P | EP - A1 - 0 187 176 (TORAY INDUSTRIES, INC.) * Claims; page 5, lines 4-9; page 13, lines 14-19; page 15, lines 18-20; page 16, lines 5-24 * -- | 1,5,8, 9, 11-20 | |
| Y | DERWENT ACCESSION NO. 82-67 201, Questel Telesystems (WPIL) DERWENT PUBLICATIONS LTD., London * Abstract * & JP-A-57 108 166 (DAINIPPON INK CHEM.K.K.) ---- | 1-4,6, 7, 15-20 | |
| | | | **TECHNICAL FIELDS SEARCHED (Int Cl 5)** |
| | | | C 08 L 23/00<br>C 08 L 63/00<br>C 08 L 67/00 |

The present search report has been drawn up for all claims

| Place of search | Date of completion of the search | Examiner |
|---|---|---|
| VIENNA | 05-06-1990 | WEIGERSTORFER |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document